# EUROPEAN PATENT SPECIFICATION

(11) **EP 4 247 607 B1**
(45) Date of publication and mention of the grant of the patent: **28.08.2024**
(21) Application number: 21823363.3
(22) Date of filing: 15.11.2021
(51) Int. Cl.: B29B 11/04, B29B 11/08, B29B 11/14, B29K 23/00, B29K 67/00

(54) **PREFORM OF A PLASTIC CONTAINER**
VORFORMLING EINES KUNSTSTOFFBEHÄLTERS
PRÉFORME D'UN RÉCIPIENT EN PLASTIQUE

(30) Priority: 17.11.2020 IT 202000027513
(43) Date of publication of application: 27.09.2023
(73) Proprietor: S.I.P.A. Società Industrializzazione Progettazione e Automazione S.p.A., 31029 Vittorio Veneto (IT)
(72) Inventor: BRUGNERA, Nicola, 31028 Vazzola (IT); MANUNTA, Mauro, 33080 Porcia (IT); MARCHIONI, Davide, 31029 Vittorio Veneto (IT); PIZZINAT, Tiziano, 31016 Cordignano (IT); ZANETTE, Dino Enrico, 31010 Godega di Sant'Urbano (IT); ZOPPAS, Matteo, 31015 Conegliano (IT)
(74) Representative: de Alteriis, Renato
(86) International application number: PCT/IB2021/060540
(87) International publication number: WO 2022/106973

(56) References cited:
- EP-A1- 3 375 593
- WO-A1-2018/225109
- US-A1- 2007 087 131
- US-A1- 2019 152 122
- US-A1- 2020 198 829

## Description

### Field of the invention

The present invention relates to the field of preforms for containers for a substance, in particular for liquids.

In particular, the invention relates to a plastic preform which, for example by means of a blow molding process, can be transformed into the end container, for example for a liquid.

### Background art

Polyethylene terephthalate (PET) is widely used for manufacturing preforms of containers, for example preforms of bottles.

Noted among the advantages of PET are its oxygen-barrier properties and the possibility of being deformed to obtain blown containers having a wide range of shapes.

However, PET is not compatible with all liquids. Indeed, certain liquids such as, for example bleach, sodium hypochlorite, and acidic or basic liquids can degrade PET. Moreover, PET absorbs moisture, whereby it is not particularly suitable for liquids such as coffee and soy sauce or for solids which are to be protected from moisture. In particular, due to the ester group, PET is attacked by acids and easily absorbs moisture and basic compounds.

In order to improve the compatibility of PET with liquids and/or to further improve the barrier properties of PET, the following have been proposed: injection processes to obtain multilayer preforms; polymer mixtures; and application of one or more coating layers. However, the preforms obtained by these methods have some disadvantages.

In particular, the multilayer preforms and the preforms provided with coating are subject to delamination, and containers with adequate structural features cannot be obtained with the preforms obtained from polymer mixtures, in particular when an attempt is made to produce lightweight containers, and moreover they do not allow obtaining a wide range of shapes of the blown containers.

Manufacturing a preform used to manufacture a container with good gas-barrier properties, in particular oxygen-barrier properties, which can be made in a wide range of shapes and which is compatible with a wide range of liquids, is not trivial, especially when lightweight containers are desired to save material and/or when recyclable materials are used.

Therefore, the need is felt to overcome the limits of the background art. Documents US2019/152122A1, US2020/198829A1 and US2007/087131A1 represent background art which is useful to understand the invention described herein.

### Summary of the invention

It is an object of the present invention to provide a preform used to make a container with good gas-barrier properties, in particular oxygen-barrier properties, which can be made in a wide range of shapes and which is compatible with a wide range of liquids, also having an adequate chemical resistance.

In particular, it is an object of the present invention to provide a preform which, in addition to the aforesaid features, is also lightweight so as to save material and/or which is made of recyclable material.

In fact, the recyclability of polymer is very important nowadays, in particular being required by the circular economy for the protection of the environment.

The present invention achieves at least one of such objects and other objects which will become apparent in light of the present description, providing a preform according to claim 1.

In particular, the preform is an assembly or group of preforms comprising, or consisting of, said outer preform and said inner preform.

Advantageously, the inner preform can be made of a material (apolar polymer) adapted to come into contact with the substance, in particular with the liquid, which is introduced into the container obtained from the preform; and the outer preform is made of a material (polar polymer) adapted to provide a good gas barrier, in particular a good oxygen barrier, and adapted to be deformed to obtain a wide range of shapes of the blown container.

Both the inner and outer preforms are made of plastic.

Advantageously, the outer preform is made of a polar polymer, preferably of polyethylene terephthalate (PET). PET is particularly advantageous because it provides a good gas barrier, in particular a good oxygen barrier, and allows a deformation of the preform to obtain a wide range of shapes of the blown container. PET also allows aesthetically pleasing containers to be made. Alternatively to PET, in all the embodiments, the outer preform can be made of another polar polymer, for example PA (polyamide), for example nylon; PLA (polylactic acid); or PHA (polyhydroxyalkanoate).

Advantageously, the inner preform is made of an apolar polymer, preferably of polyethylene (PE), preferably high-density polyethylene (HDPE), or polypropylene (PP). Such polymers are particularly advantageous because they are suitable for the contact with a wide range of substances, in particular liquids. The container obtained from a preform the inner preform of which is made of such polymers is advantageously adapted to contain substances such as acidic or basic liquids, bleach, and sodium hypochlorite, also having concentrations above 8%, coffee, soy sauce, and the like.

It is particularly preferable that the inner preform is made of HDPE.

Apolar (non-polar) polymer means, in particular, a polymer only comprising carbon and hydrogen atoms. PP and PE are apolar polymers.

Polar polymer means, in particular, a polymer also comprising other atoms, for example oxygen atoms, in addition to carbon atoms and hydrogen atoms. PET is a polar polymer. Other examples of polar polymers are polyamides (PA) such as, for example nylon, polylactic acid (PLA), and polyhydroxyalkanoates (PHA).

In order to achieve the object of the present invention, it is particularly advantageous to make the outer preform of a polar polymer and the inner preform of an apolar polymer.

Advantageously, a preform according to the invention and a container manufactured from such a preform do not have the above-described disadvantages concerning the known solutions (multilayer preforms, polymer mixtures, and application of one or more coating layers). In particular, with respect to the known solutions, a preform according to the invention is not subject to delamination, is more easily recycled, and can be blow molded without the limitations of multilayer preforms.

Preferably, the side wall of the inner preform is in contact with the side wall of the outer preform.

Thereby, the ratio of outer volume to inner volume of the container is advantageously optimized.

Optionally, the bottom of the inner preform is spaced apart from the bottom of the outer preform, or the bottom of the inner preform is in contact with the bottom of the outer preform.

In particular, the outer preform and the inner preform are constrained to each other, in particular constrained by interference or friction.

More specifically, the outer preform and the inner preform are constrained to each other so as to integrally rotate. This aspect is advantageous because the outer preform and the inner preform can thus mutually integrally rotate, in particular when the preform is heated by heating means, for example by the heating means of the blowing apparatus to make a container by blow molding the preform.

For this purpose, the outer preform is advantageously provided with at least one vertical protrusion, preferably at least two vertical protrusions, more preferably three or at least three vertical protrusions, in contact with the inner preform.

Thereby, the inner preform can advantageously be inserted into the outer preform and the coupling by interference prevents a relative rotation between the outer preform and the inner preform.

Advantageously, the preform also provides the advantage of being easily made and handled, and can be effectively used to make a container, such as a bottle, for example.

It is preferred to provide the outer preform with the one or more vertical protrusions, in particular with respect to providing the inner preform with one or more vertical protrusions, because it has been experimentally observed that there is improved coupling by interference between the outer preform and the inner preform. Moreover, it is constructionally easier to make a component of the mold, in particular a core, provided with one or more grooves, each to obtain a corresponding vertical protrusion on the inner surface of the outer preform.

Preferably, in order to improve the constraint between the outer preform and the inner preform, the inner preform is provided with at least one groove, in particular a vertical groove, preferably at least two or at least three grooves. Each vertical protrusion of the outer preform is inserted into a respective groove of the inner preform.

The outer preform, provided with said one or more vertical protrusions, can be made by means of a core provided with at least one vertical groove for obtaining a corresponding vertical protrusion of the inner surface of the outer preform.

In other words, the core is provided with a vertical groove for each vertical protrusion of the outer preform.

An inner preform, provided with one or more vertical grooves, can be made by means of a component of a mold for molding the outer surface of said inner preform, the component being provided with at least one vertical protrusion to obtain a corresponding vertical groove of the outer surface of the inner preform.

In other words, the component is provided with a vertical protrusion for each vertical groove of the outer preform.

Further features and advantages of the invention will become more apparent in light of the detailed description of non-exclusive embodiments.

The dependent claims describe particular embodiments of the invention.

### Brief description of the drawings

In the description of the invention, reference is made to the accompanying drawings, which are provided by way of non-limiting example, in which:
Figure 1 shows a perspective view of a preform according to the invention;
Figure 2 shows a front side view of the preform in Figure 1;
Figure 3 shows section D-D of Figure 2;
Figure 4 shows a bottom front view of the preform in Figure 1;
Figure 5 shows section A-A of Figure 4;
Figure 6 shows detail B of Figure 5;
Figure 7 shows detail C of Figure 5;
Figure 8 shows a perspective view of a part of the preform in Figure 1;
Figure 9 shows a side front view of another part of the preform in Figure 1;
Figure 10 shows section F-F of Figure 9.

The same elements, or functionally equivalent elements, have the same reference numeral.

### Description of exemplary embodiments of the invention

With reference to the drawings, exemplary embodiments of a preform 3 according to the invention are described.

Preform 3 is made of plastic. A container, for example a bottle, can be obtained from preform 3, for example by means of blow molding.

Preform 3 comprises an outer preform 1 and an inner preform 2 inserted into the outer preform 1.

The outer preform 1 and the inner preform 2, both made of plastic, i.e., of polymer material, are made of a mutually different material.

Advantageously, the outer preform 1 is made of a polar polymer and the inner preform 2 is made of an apolar polymer.

Preferably, the outer preform 1 is made of a polymer having a greater density than the polymer of which the inner preform 2 is made.

Preferably, the polymer of which the outer preform 1 is made has a density from 1.1 to 1.5 g/cm³, for example equal to about 1.38 g/cm³, and/or the polymer of which the inner preform 2 is made has a density from 0.8 to 0.97 g/cm³, for example from 0.93 to 0.97 g/cm³.

Preferably, the outer preform 1 is made of PET, in particular it comprises or consists of PET, and/or the inner preform 2 is made of PE, preferably HDPE, or PP. In particular, the inner preform 2 preferably comprises or consists of PE, preferably HDPE, or PP.

The outer preform 1 and the inner preform 2 are, in particular, distinct from each other.

The outer preform 1 is a hollow body and the inner preform 2 is a hollow body. The cavity of the outer preform 1 is occupied by the inner preform 2.

Preferably, the outer preform 1 and the inner preform 2 are both rigid, i.e., non-flexible.

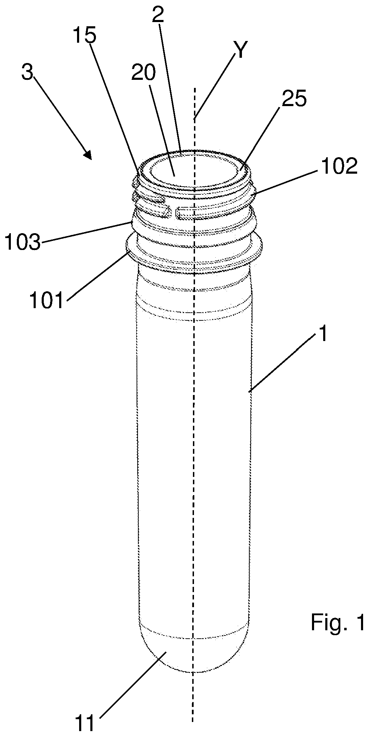

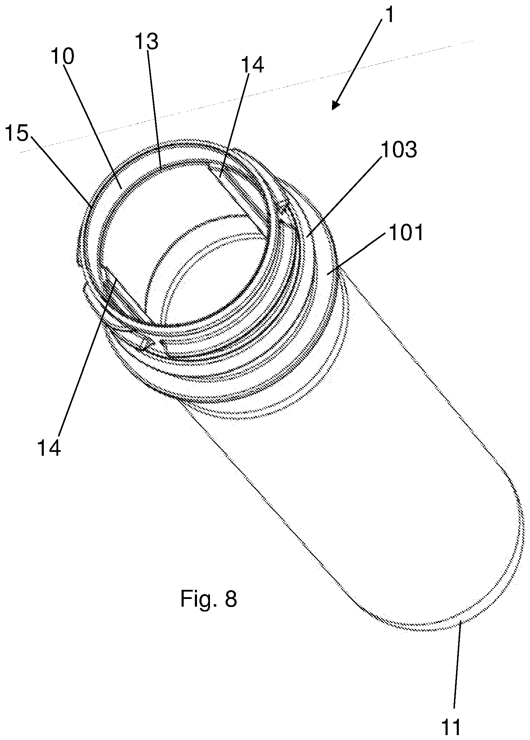

With particular reference to Figures 1 and 8, the outer preform 1 is provided with an opening 10 and with a bottom 11, opposite to opening 10. Bottom 11 is preferably curved, and preferably substantially has the shape of a spherical cap. Opening 10 extends about an axis Y, or in other words, the wall of the outer preform 1 which delimits opening 10 extends about axis Y. Axis Y preferably is the longitudinal axis, preferably the central longitudinal axis, of preform 3, and in particular, the longitudinal axis of the outer preform 1 and of the inner preform 2. Axis Y passes through the bottom 11 of the outer preform 1.

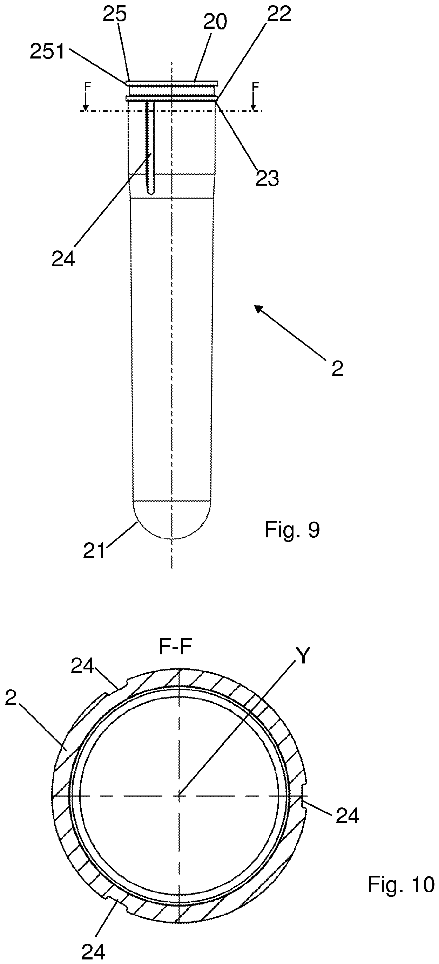

With particular reference to Figures 1 and 9, the inner preform 2 is provided with an opening 20, which is also an opening of preform 3, through which a liquid can pass. Preferably, opening 20 is the only opening of preform 3. Opening 20 extends about axis Y, or in other words, the wall of the inner preform 2 which delimits opening 20 extends about axis Y.

The inner preform 2 is also provided with a bottom 21, which is opposite to opening 20. Axis Y passes through bottom 21. Bottom 21 is preferably curved, and preferably substantially has the shape of a spherical cap.

Preferably, the bottom 11 of the outer preform 1 and the bottom 21 of the inner preform 2 have the same shape or substantially the same shape.

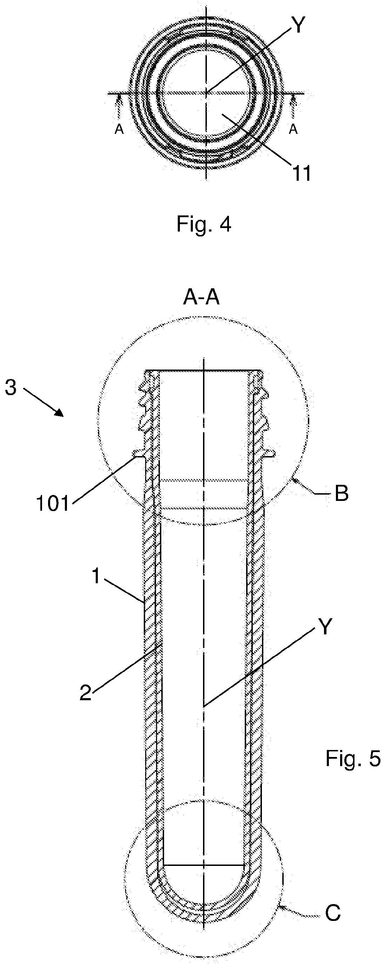

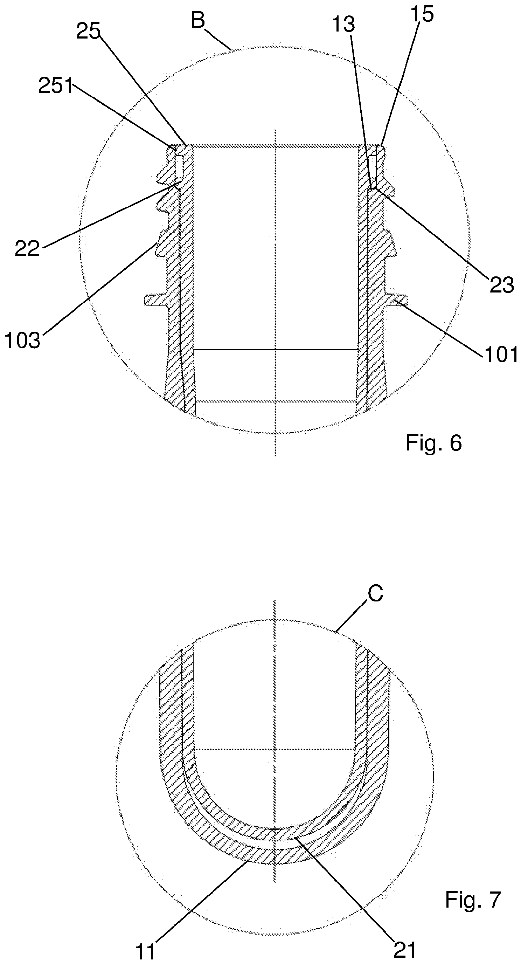

Preferably, the bottom 21 of the inner preform 2 is spaced apart from the bottom 11 of the outer preform 1 (Figures 5 and 7). In particular, an empty space is preferably provided between bottom 11 and bottom 21.

Preferably, the inner preform 2 has a shorter length, parallel to axis Y, than the outer preform 1.

By spacing apart bottom 11 from bottom 21, it may be ensured that the upper end 25 (i.e., brim 25) of the inner preform 2 preferably is at the same level as the upper end 15 (i.e., brim 15) of the outer preform 1.

Preferably, any possible empty space between the outer preform 1 and the inner preform 2 substantially is a space in which there is air, in particular only air.

In variants not shown, the bottom 21 of the inner preform 2 and the bottom 11 of the outer preform 1 are in contact with each other.

The outer preform 1 and the inner preform 2 are coaxial to each other, in particular coaxial with respect to axis Y.

When reference is made in the present description to an "annular" feature, it means a feature which extends about axis Y.

When reference is made in the present description to a "vertical" feature, it means a feature which extends parallel, or substantially parallel, to axis Y. In particular, reference is made to a feature the extension of which parallel to axis Y is greater than the extension thereof parallel to two other axes perpendicular to each other and to axis Y.

Preferably, the outer preform 1 is externally provided with a flange 101, in particular an annular flange, also referred to as a "neck ring" or "support ring". Flange 101 serves, in particular, to support preform 3 during various operations, for example during the movement of preform 3.

Preferably, the outer preform 1 is externally provided with a thread 102 which serves for screwing a cap of the container.

Preferably, the outer preform 1 is externally provided with an annular protrusion 103 between flange 101 and thread 102. An element, also referred to a seal-tear element, which seals the cap of the container obtained from the preform, can be arranged about the annular protrusion 103.

The annular protrusion 103 is preferably tapered towards opening 10, 20. Preferably, the wall thickness of the outer preform 1 is from 2 to 4 mm. Said wall thickness preferably does not comprise the thickness of the one or more vertical protrusions 14, flange 101, thread 102, and of the annular protrusion 103.

As mentioned above, the inner preform 2 preferably does not protrude outside the outer preform 1.

Preferably, the brim 25 of the inner preform 2 and the brim 15 of the outer preform 1 substantially are at the same level, i.e., substantially at the same height, or they substantially are coplanar.

Preferably, the inner preform 2 is externally provided with an annular protrusion 251 (Figure 6). Preferably, the annular protrusion 251 is at the end which defines the brim 25 of the inner preform 2. Preferably, the annular protrusion 251 is in contact, in particular directly in contact, with the outer preform 1. In particular, the outer side surface of the annular protrusion 251 is in contact with the inner side surface of the outer preform 1.

Thereby, advantageously, a passage of liquid between the outer preform 1 and the inner preform 2 is substantially prevented.

Preferably, the inner preform 2 is also provided with an annular protrusion 22 in contact with the outer preform 1. More particularly, the outer surface of the inner preform 2 is provided with the annular protrusion 22.

In particular, the annular protrusion 22 is spaced apart from the annular protrusion 251, with respect to axis Y.

Preferably, there is an empty annular space between the annular protrusion 251 and the annular protrusion 22.

The empty space facilitates the exit of air during the insertion of the inner preform 2 into the outer preform 1. By providing the two annular protrusions 251, 22, between which there is an annular recess (i.e., the empty space), the handling of the inner preform is facilitated.

Preferably, considering the inner preform 2 inserted into the outer preform 1, the annular protrusion 22 is between flange 101 and brim 25 (or equivalently brim 15); in particular, the annular protrusion 22 is between the annular flange 103 (when provided) and brim 25 (see in particular Figure 6).

Preferably, the wall thickness of the inner preform 2 is from 0.7 to 3 mm. Said wall thickness preferably does not comprise the thickness of the possible annular protrusions 22, 251.

Preferably, the outer preform 1 and the inner preform 2 are provided with at least one respective step 13, 23 (Figures 6, 8, 9). In particular, the steps 13, 23 preferably are annular.

More particularly, the inner surface of the outer preform 1 is provided with step 13, and the outer surface of the inner preform 2 is provided with step 23.

Step 13 of the outer preform 1 and step 23 of the inner preform 2 abut against each other; in particular they are in axial abutment.

Step 13 of the outer preform 1 is preferably arranged, with respect to axis Y, between opening 10 and flange 101, more particularly between the opening 10 and the annular protrusion 103 (when provided).

Step 23 of the inner preform 2 is, in particular, defined by the annular protrusion 22.

The outer preform 1 and the inner preform 2 are constrained to each other, in particular constrained by interference. More particularly, the outer preform 1 and the inner preform 2 are constrained to each other so as to integrally rotate.

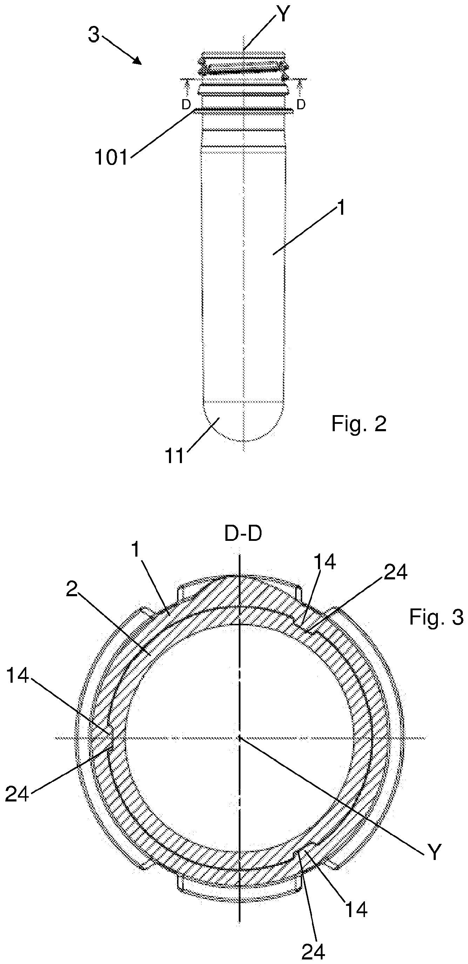

For this purpose, the outer preform 1 is provided with at least one vertical protrusion 14 (see in particular Figures 3 and 8) in contact with the inner preform 2. In particular, the inner surface of the outer preform 1 is provided with at least one vertical protrusion 14. More particularly, each vertical protrusion 14 is in contact with the outer surface of the inner preform 2.

Preferably, there are provided at least two or at least three vertical protrusions 14, for example three vertical protrusions 14 preferably arranged at about 120° from one another.

For example, only three vertical protrusions 14 can be provided.

Each vertical protrusion 14 substantially is a rib.

Each vertical protrusion 14 forms a projection with respect to the portion of inner surface from which it extends, preferably having a thickness from 0.5 to 5 mm. Said thickness is measured perpendicularly to axis Y, in particular along a radial axis. Preferably, each vertical protrusion 14 has a length, parallel to axis Y, from 0.5 to 5 cm.

Preferably, each vertical protrusion 14 has a smaller width than the length thereof. The length of each vertical protrusion 14 preferably is greater than the thickness thereof.

Each vertical protrusion 14 serves to constrain the outer preform 1 and the inner preform 2 to each other, in particular so that they can substantially rotate integrally with each other.

Preferably, the upper surface (proximal to opening 10) of each vertical protrusion 14 defines part of the aforesaid step 13 of the outer preform 1.

Preferably, each vertical protrusion 14 extends partially above and partially below flange 101. In other words, each vertical protrusion 14 comprises an upper portion above flange 101 and a lower portion below flange 101.

Preferably, the lower portion has a greater length along axis Y than the length of the upper portion.

Preferably, each vertical protrusion 14 is continuous, i.e., without discontinuities.

Preferably, but not exclusively, the inner preform 2 is provided with at least one groove 24, in particular a vertical groove. In particular, the outer surface of the inner preform 2 is provided with at least one groove 24 (Figures 3, 9, 10).

The number of grooves 24 preferably is equal to the number of vertical protrusions 14.

Therefore, the inner preform 2 is preferably provided with at least two or at least three grooves 24, for example three grooves 24 preferably arranged at 120° from one another, in particular like the vertical protrusions 14.

Each vertical protrusion 14 of the outer preform 1 is inserted into a respective groove 24 of the inner preform 2. In particular, each vertical protrusion 14 and each groove 24 are sized so as to substantially prevent a relative rotation between the outer preform 1 and the inner preform 2. Reference is particularly made to a relative rotation about axis Y, in both directions of rotation.

Inserting each vertical protrusion 14 into a respective vertical groove 24 allows the preferred, but not exclusive, possibility of ensuring the portion of side wall of the outer preform 1 extending between flange 101 and bottom 11 is in contact, in particular completely in contact, with a corresponding portion of side wall of the inner preform 2. In particular, said portion of side wall of the inner preform 2 extends between flange 101 and bottom 21.

Preferably, each vertical groove 24 has a thickness, or depth, from 0.1 to 1.5 mm. Said thickness, or depth, is measured perpendicularly to axis Y, in particular along a radial axis.

Preferably, each vertical groove 24 has a length, parallel to axis Y, from 0.5 to 5 cm. Each groove 24, for example extends starting from the annular protrusion 22 downwards (as shown in Figure 9, i.e. towards the bottom 21).

Said one or more grooves 24 also facilitate the exit of air during the insertion of the inner preform 2 into the outer preform 1.

Alternatively, in a variant not shown, the grooves 24 can discontinue the annular protrusion 22. Therefore, when three grooves 24 are provided, for example, three annular protrusions are provided, separated from one another by the grooves 24. Each annular protrusion defines a respective step 23, in particular a partially annular step.

In a variant not shown, the outer preform 1 is provided with said one or more vertical protrusions 14, and the inner preform 2 is not provided with said one or more grooves 24.

In said variant, the one or more vertical protrusions 14 of the outer preform 1 are in contact, in particular directly in contact, with a corresponding portion of outer side surface of the inner preform 2, where there is no groove.

In other words, for example, the vertical protrusions 14 are at least in contact with a respective portion of a same cylindrical, or substantially cylindrical, surface which at least partially defines, for example part, of the outer wall of the inner preform 2. Preferably, each vertical protrusion 14 extends into the upper half of the outer preform 1, i.e., into the half comprising opening 10.

An outer preform 1, provided with said one or more vertical protrusions 14, of a preform 3 can be made by means of a core (not shown). The core, also referred to as a male part, is the component of a mold which is adapted to mold the inner surface of the outer preform 1.

The core is provided with at least one vertical groove for obtaining a corresponding vertical protrusion 14 of the inner surface of the outer preform 1.

An inner preform 2, provided with said one or more vertical grooves 24, of a preform 3 can be obtained by means of a component (not shown) of a mold for molding the outer surface of an inner preform 2.

In particular, the component defines a molding cavity.

The component is provided with at least one vertical protrusion to obtain a corresponding vertical groove of the outer surface of the inner preform 2.

## Claims

1. A preform (3) of a container, in particular of a bottle, made of plastic comprising an outer preform (1) and an inner preform (2) inserted into the outer preform (1);
wherein the outer preform (1) and the inner preform (2) are made of a mutually different material, in particular of a mutually different polymer;
wherein the outer preform (1) is provided with at least one vertical protrusion (14) in contact with the inner preform (2);
wherein the outer preform (1) is made of a polar polymer; **characterized in that** the inner preform (2) is made of an apolar polymer.

2. A preform (3) according to claim 1, wherein the inner surface of the outer preform (1) is provided with said at least one vertical protrusion (14).

3. A preform (3) according to any one of the preceding claims, wherein said at least one vertical protrusion (14) has a length from 0.5 to 5 cm and/or a thickness from 0.5 to 5 mm.

4. A preform (3) according to any one of the preceding claims, wherein the outer preform (1) is provided with at least two or at least three vertical protrusions (14) in contact with the inner preform (2).

5. A preform (3) according to any one of the preceding claims, wherein the outer preform (1) is provided with three vertical protrusions (14); preferably wherein said three vertical protrusions (14) are arranged at 120° from one another.

6. A preform (3) according to any one of the preceding claims, wherein the inner preform (2) is provided with at least one vertical groove (24); and wherein each vertical protrusion (14) is inserted into a respective vertical groove (24).

7. A preform (3) according to claim 6, wherein the inner preform (2) is provided with three vertical grooves (24), each vertical protrusion (14) of the outer preform (1) being inserted into a respective groove (24) of the inner preform (2).

8. A preform according to any one of claims 1 to 5, wherein each vertical protrusion (14) is in contact with at least one respective portion of the same cylindrical surface which defines at least part of the outer surface of the inner preform (2).

9. A preform (3) according to any one of the preceding claims, wherein the inner preform (2) is provided with at least one annular, or partially annular, protrusion (22) in contact with the outer preform (1).

10. A preform (3) according to any one of the preceding claims, wherein the outer preform (1) and the inner preform (2) are provided with at least one respective step (13, 23), in particular which is annular or partially annular; and wherein said at least one step (13) of the outer preform (1) and said at least one step (23) of the inner preform (2) abut against each other.

11. A preform (3) according to any one of the preceding claims, wherein the outer preform (1) is made of a polymer having a greater density than the density of the polymer of which the inner preform (2) is made.

12. A preform (3) according to any one of the preceding claims, wherein the outer preform (1) is made of PET.

13. A preform (3) according to any one of the preceding claims, wherein the inner preform (2) is made of PE, preferably HDPE, or PP.

14. A preform (3) according to any one of the preceding claims, wherein the bottom (21) of the inner preform (2) is spaced apart from the bottom (11) of the outer preform (1); and/or wherein the side wall of the inner preform (1) is in contact with the side wall of the outer preform (1).

## Patentansprüche

1. Vorformling (3) eines Behälters, insbesondere einer Flasche, aus Kunststoff, umfassend einen äußeren Vorformling (1) und einen inneren Vorformling (2), der in den äußeren Vorformling (1) eingesetzt ist,
wobei der äußere Vorformling (1) und der innere Vorformling (2) aus einem voneinander verschiedenen Material, insbesondere aus einem voneinander verschiedenen Polymer, hergestellt sind;
wobei der äußere Vorformling (1) mit mindestens einem vertikalen Vorsprung (14) in Kontakt mit dem inneren Vorformling (2) versehen ist;
wobei der äußere Vorformling (1) aus einem polaren Polymer hergestellt ist; **dadurch gekennzeichnet, dass** der innere Vorformling (2) aus einem unpolaren Polymer hergestellt ist.

2. Vorformling (3) nach Anspruch 1, wobei die Innenfläche des äußeren Vorformlings (1) mit dem mindestens einen vertikalen Vorsprung (14) versehen ist.

3. Vorformling (3) nach einem der vorhergehenden Ansprüche, wobei der mindestens eine vertikale Vorsprung (14) eine Länge von 0,5 bis 5 cm und/oder eine Dicke von 0,5 bis 5 mm aufweist.

4. Vorformling (3) nach einem der vorhergehenden Ansprüche, wobei der äu-βere Vorformling (1) mit mindestens zwei oder mindestens drei vertikalen Vorsprüngen (14) in Kontakt mit dem inneren Vorformling (2) versehen ist.

5. Vorformling (3) nach einem der vorhergehenden Ansprüche, wobei der äu-βere Vorformling (1) mit drei vertikalen Vorsprüngen (14) versehen ist; wobei vorzugsweise die drei vertikalen Vorsprünge (14) unter 120° zueinander angeordnet sind.

6. Vorformling (3) nach einem der vorhergehenden Ansprüche, wobei der innere Vorformling (2) mit mindestens einer vertikalen Nut (24) versehen ist; und wobei jeder vertikale Vorsprung (14) in eine jeweilige vertikale Nut (24) eingesetzt ist.

7. Vorformling (3) nach Anspruch 6, wobei der innere Vorformling (2) mit drei vertikalen Nuten (24) versehen ist, wobei jeder vertikale Vorsprung (14) des äußeren Vorformlings (1) in eine jeweilige Nut (24) des inneren Vorformlings (2) eingesetzt ist.

8. Vorformling nach einem der Ansprüche 1 bis 5, wobei jeder vertikale Vorsprung (14) mit mindestens einem jeweiligen Abschnitt derselben zylindrischen Fläche in Kontakt steht, die mindestens einen Teil der Außenfläche des inneren Vorformlings (2) definiert.

9. Vorformling (3) nach einem der vorhergehenden Ansprüche, wobei der innere Vorformling (2) mit mindestens einem ringförmigen oder teilweise ringförmigen Vorsprung (22) in Kontakt mit dem äußeren Vorformling (1) versehen ist.

10. Vorformling (3) nach einem der vorhergehenden Ansprüche, wobei der äu-βere Vorformling (1) und der innere Vorformling (2) mit mindestens einer jeweiligen Stufe (13, 23) versehen sind, die insbesondere ringförmig oder teilweise ringförmig ist; und wobei die mindestens eine Stufe (13) des äußeren Vorformlings (1) und die mindestens eine Stufe (23) des inneren Vorformlings (2) aneinander anliegen.

11. Vorformling (3) nach einem der vorhergehenden Ansprüche, wobei der äu-βere Vorformling (1) aus einem Polymer hergestellt ist, das eine größere Dichte als die Dichte des Polymers aufweist, aus dem der innere Vorformling (2) hergestellt ist.

12. Vorformling (3) nach einem der vorhergehenden Ansprüche, wobei der äu-βere Vorformling (1) aus PET hergestellt ist.

13. Vorformling (3) nach einem der vorhergehenden Ansprüche, wobei der innere Vorformling (2) aus PE, vorzugsweise HDPE, oder PP hergestellt ist..

14. Vorformling (3) nach einem der vorhergehenden Ansprüche, wobei der Boden (21) des inneren Vorformlings (2) von dem Boden (11) des äußeren Vorformlings (1) beabstandet ist; und/oder wobei die Seitenwand des inneren Vorformlings (1) in Kontakt mit der Seitenwand des äußeren Vorformlings (1) steht.

## Revendications

1. Préforme (3) d'un récipient, en particulier d'une bouteille, en plastique comprenant une préforme externe (1) et une préforme interne (2) insérée dans la préforme externe (1) ; dans laquelle la préforme externe (1) et la préforme interne (2) sont faites d'un matériau mutuellement différent, en particulier d'un polymère mutuellement différent ;
dans laquelle la préforme externe (1) est pourvue d'au moins une saillie verticale (14) en contact avec la préforme interne (2) ;
dans laquelle la préforme externe (1) est faite d'un polymère polaire ; **caractérisée en ce que** la préforme interne (2) est faite d'un polymère apolaire.

2. Préforme (3) selon la revendication 1, dans laquelle la surface interne de la préforme externe (1) est pourvue de ladite au moins une saillie verticale (14).

3. Préforme (3) selon l'une quelconque des revendications précédentes, dans laquelle ladite au moins une saillie verticale (14) a une longueur comprise entre 0,5 et 5 cm et/ou une épaisseur comprise entre 0,5 et 5 mm.

4. Préforme (3) selon l'une quelconque des revendications précédentes, dans laquelle la préforme externe (1) est pourvue d'au moins deux ou au moins trois saillies verticales (14) en contact avec la préforme interne (2).

5. Préforme (3) selon l'une quelconque des revendications précédentes, dans laquelle la préforme externe (1) est pourvue de trois saillies verticales (14) ; de préférence dans laquelle lesdites trois saillies verticales (14) sont disposées à 120° l'une de l'autre.

6. Préforme (3) selon l'une quelconque des revendications précédentes, dans laquelle la préforme interne (2) est pourvue d'au moins une rainure verticale (24) ; et dans laquelle chaque saillie verticale (14) est insérée dans une rainure verticale respective (24).

7. Préforme (3) selon la revendication 6, dans laquelle la préforme interne (2) est pourvue de trois rainures verticales (24), chaque saillie verticale (14) de la préforme externe (1) étant insérée dans une rainure respective (24) de la préforme interne (2).

8. Préforme selon l'une quelconque des revendications 1 à 5, dans laquelle chaque saillie verticale (14) est en contact avec au moins une portion respective de la même surface cylindrique qui définit au moins une partie de la surface externe de la préforme interne (2).

9. Préforme (3) selon l'une quelconque des revendications précédentes, dans laquelle la préforme interne (2) est pourvue d'au moins une saillie annulaire, ou partiellement annulaire, (22) en contact avec la préforme externe (1).

10. Préforme (3) selon l'une quelconque des revendications précédentes, dans laquelle la préforme externe (1) et la préforme interne (2) sont pourvues d'au moins un échelon respectif (13, 23), en particulier qui est annulaire ou partiellement annulaire ; et dans laquelle ledit au moins un échelon (13) de la préforme externe (1) et ledit au moins un échelon (23) de la préforme interne (2) viennent en butée l'un contre l'autre.

11. Préforme (3) selon l'une quelconque des revendications précédentes, dans laquelle la préforme externe (1) est faite d'un polymère ayant une densité supérieure à la densité du polymère dont est faite la préforme interne (2).

12. Préforme (3) selon l'une quelconque des revendications précédentes, dans laquelle la préforme externe (1) est en PET.

13. Préforme (3) selon l'une quelconque des revendications précédentes, dans laquelle la préforme interne (2) est en PE, de préférence en PEHD, ou en PP.

14. Préforme (3) selon l'une quelconque des revendications précédentes, dans laquelle le fond (21) de la préforme interne (2) est espacé du fond (11) de la préforme externe (1) ; et/ou dans laquelle la paroi latérale de la préforme interne (1) est en contact avec la paroi latérale de la préforme externe (1).
